# EUROPÄISCHE PATENTSCHRIFT

(11) **EP 1 361 078 B1**
(45) Veröffentlichungstag und Bekanntmachung des Hinweises auf die Patenterteilung: **12.01.2005**
(21) Anmeldenummer: 03006611.2
(22) Anmeldetag: 25.03.2003
(51) Int. Cl.: B60C 17/08, B60C 3/04

(54) **Pannenlauffähiger Fahrzeugluftreifen**
Run flat pneumatic tire
Pneumatique pouvant rouler à plat

(30) Priorität: 11.05.2002 DE 10221078
(43) Veröffentlichungstag der Anmeldung: 12.11.2003
(73) Patentinhaber: Continental Aktiengesellschaft, 30165 Hannover (DE)
(72) Erfinder: Frerichs, Udo, 30855 Langenhagen (DE)

(56) Entgegenhaltungen:
- EP-A- 0 475 258
- EP-A- 0 822 105
- EP-A- 1 145 874
- WO-A-02/02354
- US-A- 5 261 474

## Beschreibung

Die Erfindung betrifft einen Fahrzeugluftreifen mit einem Laufstreifen, einer aus einer Vielzahl von Festigkeitsträgern gebildeten Radialkarkasse, die sich vom Scheitelbereich über zwei Seitenwandteile nach radial innen erstreckt und an Kernen von Wülsten verankert ist, und einem Gürtel aus wenigstens zwei Cordlagen, welcher zwischen dem Laufstreifen und dem Scheitelbereich der Radialkarkasse eingebettet ist, wobei in den Seitenwandteilen jeweils wenigstens ein Versteifungselement zur Ermöglichung einer Pannenfahrt eingebettet ist, welches steifer als das sie umgebende Seitenwandteil ist.

Ein derartiger Fahrzeugluftreifen weist eine gegenüber nicht für den Pannenlauf geeigneten Reifen eine verdickte Seitenwand auf und ist allgemein in Fachkreisen als "Self-supporting tire (SST)" oder auch als "Run-flat tire" (RFT)" bekannt. In der Regel weist das die Seitenwand verstärkende Verstärkungselement die Form einer Mondsichel auf und ist im oberen Bereich der Seitenwand axial innen so angeordnet, dass die konvexe Wölbung des Verstärkungselements der Wölbung des Übergangsbereich von Schulter zur Seitenwand und der Wölbung der Seitenwand selbst folgt. Die älteste bekannte Druckschrift, die sich mit einer derartigen Ausgestaltung beschäftigt, ist die DE-PS 467 583; weitere typische Lösungen sind aus der US 3 954 131, der US 3 949 798, der GB 2138367, der DE-OS 2 331 530, der DE 29 43 654 A1, der US 4 287 924, der EP 0 005 399 A1 und der US 3 954 131 bekannt; neuere Lösungen, die eine Verbesserung bekannter Notlauflösungen anstreben, werden beispielsweise in der EP 1 160 101 A2, der WO 01/57 129 A1, der EP 1 156 937 A1 und der EP 1 124 695 A1 beschrieben, um nur einige aufzuzählen.

Alle derartigen Lösungen verfolgen dasselbe Prinzip. Kollabiert der Reifen aufgrund eines plötzlichen oder schleichenden Luftverlusts, würden sich bei einem normalen Reifen ohne Seitenwandverstärkungen die Seitenwände nach außen beulen und Taschen bilden, welche nach wenigen Metern zurückgelegter Fahrstrecke durch Überhitzung, Reibung und Scheuern vollständig zerstört werden, so dass insbesondere bei höheren Geschwindigkeiten das Fahrzeug nicht mehr spurstabil ist und unkontrolliert ausbrechen könnte, was katastrophale Folgen nach sich ziehen kann. Durch die harten mondsichelförmigen Einsätze wird den Seitenwänden ein gewisses Maß an Selbsttragefähigkeit verliehen; derartige Reifen beulen sich zwar im Bereich der Seitenwände auch nach außen aus und auch hier kommt es zu Knickbildungen und auch Berührungen der Innenseele des Reifens, jedoch sind die Radien der Knicke kleiner und zudem bietet die Materialstärke der Einsätze genügend Reserven beim Entstehen von Abrieb durch Aneinanderscheuern von Teilen der Seitenwände aneinander. Daher sind derartige Reifen in der Lage, auch bei vollständigem Luftverlust Strecken im Bereich von 100 bis etwa 200 km'bei 80 km/h zurückzulegen, was in der Regel ausreicht, eine Werkstatt anzufahren. Wichtiger hierbei ist allerdings, dass die Spurstabilität und die Lenkbarkeit des Fahrzeugs auch bei vollständigem Luftverlust eines Reifens erhalten bleibt.

Wie bereits dargelegt, folgen die mondsichelförmigen Verstärkungselemente in ihrer Außenkontur der toroidförmigen Kontur des Reifens, insbesondere im Bereich von Schulter und Seitenwand. Eine derartige Ausgestaltung ist naheliegend und drängt sich dem Fachmann geradezu auf, da die Toroidform des Reifens vorgegeben zu sein scheint und die Herstellung eines derartigen Reifens mit der Kontur des Reifens folgenden Form der Verstärkungselemente die geringsten herstellungsbedingten Probleme zu bereiten scheint.

Gleichwohl sind derartige Reifen mit Nachteilen behaftet, welche der Erfinder ausräumen möchte. Denn auch bei Reifen mit mondsichelförmigen Versteifungseinsätzen findet die Höchstbelastung im Bereich des Übergangs von Seitenwand zur radial inneren Seite des Laufstreifens statt, welcher sich einknickt und einer hohen Druckbelastung bei gleichzeitiger Verringerung der Radien unterliegt. Dies führt zur schrittweise Zerstörung des Gummimaterials in diesem Bereich, bedingt insbesondere durch Reibung, Druckbeanspruchung, Knicke und Temperaturerhöhungen. Kritisch ist insbesondere, wenn sich der innere Seitenwandbereich an den inneren Laufstreifenbereich anlegt. Denn in der Regel besteht die luftdichte Innenwandung eines Fahrzeugluftreifens aus Butylkautschuk, welcher besonders empfindlich gegen Reibbeanspruchungen ist. In der Regel kann aber die Innenseite eines Fahrzeugluftreifens nicht aus einer härteren Gummimischung hergestellt werden, da diese im Gegensatz zu Butylkautschuk nicht luftdicht ist.

Der Erfindung lag daher die Aufgabe zugrunde, einen Fahrzeugluftreifen der eingangs geschilderten Art zu schaffen, welcher im Pannenlauffall geringeren Belastungen unterworfen ist als bei herkömmlichen Lösungen.

Diese Aufgabe wird mit einem Fahrzeugluftreifen gelöst, welcher die Merkmale des Patentanspruchs 1 aufweist. Erfindungsgemäß ist vorgesehen, dass die Seitenwandteile und das Verstärkungselement des Fahrzeugluftreifens einen wellenförmigen Krümmungsverlauf aufweisen, derart, dass eine Mittellinie des Verstärkungselements wenigstens eine Krümmungsumkehrung aufweist, wobei das Verstärkungselement in einem mittleren Bereich ein konvexkonkaves Profil aufweist, dessen konvexe Wölbung nach axial innen gerichtet ist.

Ein gattungsgemäßer Fahrzeugluftreifen ist aus der WO-A-02/02354 bekannt.

Der erfindungsgemäße Fahrzeugluftreifen ist also nicht torusförmig, sondern hat eine Seitenwand mit einem etwa S-förmigen Verlauf. Dies führt zu überraschenden Effekten, mit denen sich die Aufgabe lösen lässt. Insbesondere durch die nach axial innen gerichtete konvexe Wölbung wird die Richtung des Einknickens des luftleeren Fahrzeugluftreifens nach axial innen verlegt; der erfindungsgemäße Fahrzeugluftreifen beult sich also nach innen ein und nicht nach außen aus. Dies ermöglicht es, insbesondere den Radius im Übergangsbereich von Laufstreifen zu Seitenwandteil relativ groß zu halten und den Bereich des Anfalls der Druckbelastung von dem Übergangsbereich von Laufstreifen zu Seitenwand auf den mittleren Bereich des Einsatzes zu verlegen. In diesem Bereich ist der Einsatz relativ dick gehalten und istdort in der Lage, Druckbelastungen über einen relativ langen Zeitraum standzuhalten. Durch die Ausgestaltung des Einsatzes mit wenigstens einer Krümmungsumkehrung wird eine Art Kniegelenk geschaffen, welches dafür sorgt, dass der Reifen nach axial innen einbeult. Entsprechend bewegen sich nicht mehr innere Bereiche des Reifens aufeinander zu und berühren sich im Extremfall, sondern es bewegen sich äußere Bereiche des Reifens aufeinander zu, insbesondere der Schulterbereich des Laufstreifens in Richtung einer Scheuerleiste des unteren Seitenwandbereiches. Diese Bereiche sind jedoch bezüglich Reibkräften sehr viel unkritischer zu betrachten als die Innenschicht aus Butylkautschuk, da diese Bereiche aus einer harten Gummimischung hergestellt werden können.

Auch im normalen Fahrbetrieb weist der erfindungsgemäße Fahrzeugluftreifen Vorteile gegenüber herkömmlichen Lösungen auf. Denn der Federungskomfort ist bei üblichen SST-Reifen deutlich schlechter als bei normalen, nicht für den Pannenlauf geeigneten Reifen. Die verdickte Seitenwand bei SST-Reifen läßt nämlich ein Einfedern des Reifens kaum zu. Der erfindungsgemäße Fahrzeugluftreifen jedoch läßt jedoch ein gewisses Maß an Einfederung zu, da die als Kniegelenk dienende Krümmungsumkehrung eine Flexibilität der Seitenwand ermöglicht.

Die Idee, Seitenwände mit einer oder mehreren Krümmungsumkehrungen zu versehen und eine von der Torusform abweichende Form des Reifens zu schaffen, ist an sich bekannt, nämlich durch die AT 349 337 B1 und die US 5,370,169 A. Diese Lösungen dienen aber gänzlich anderen Zwecken und sind keineswegs notlaufgeeignet. In der US 595,422 A sind schon verdickte Seitenwände mit nach axial innen gerichteten Einsätzen mit konvexer Wölbung bekannt, jedoch dient auch ein solcher Reifen einem anderen Zweck und kann die Probleme nicht lösen, da im Extremfall auch hier die Innenschichten des Reifens aneinander reiben.

Gemäß praktischen Ausgestaltungen der Erfindung kann vorgesehen sein, dass die Radialkarkasse um die Kerne von axial innen nach axial außen herumgeführt ist, wobei ein Ende der Radialkarkasse von einer unteren Cordlage des Gürtels abgedeckt ist. Hierbei endet also der sogenannte Lagenumschlag der Karkasse um den Kern unterhalb des Gürtels, wodurch der Gürtel dazu beiträgt, den Lagenumschlag zu sichern.

Desweiteren kann vorgesehen sein, dass dieRadialkarkasse aus zwei Lagen besteht, welche um die Kerne von axial innen nach axial außen herumgeführt sind, wobei hierbei vorgesehen sein kann, dass wenigstens ein Ende einer Lage der Radialkarkasse in einem mittleren oder einem oberen Bereich des Seitenwandteils angeordnet ist. Die Karkasse kann also doppellagig sein, wobei die Höhe des Lagenumschlages beider Lagen gleich oder unterschiedlich sein kann. Bevorzugt wird dabei eine geringere Höhe des axial äußeren Endes einer der Lagen.

In einer weiteren praktischen Ausgestaltung der Erfindung kann vorgesehen sein, dass ein Ende des Verstärkungselementes von wenigstens einer Cordlage des Gürtels abgedeckt ist. Ferner kann vorgesehen sein, dass das Verstärkungselement einstückig mit einem über dem Kern angeordneten Apex verbunden ist, wobei Verstärkungselement und Apex aus dem gleichen Material bestehen. Eine derartige Ausgestaltung hätte insbesondere aus produktionstechnischen Gründen Vorteile, da hierbei der Apex in das Verstärkungselement integriert wäre, wodurch das Zusammenführen von Verstärkungselement und Apex mit der Karkasse in einem Arbeitsschritt möglich wäre.

Alternativ kann auch vorgesehen sein, dass das Verstärkungselement und der Apex zwei separate Bauteile sind, wobei dann weiter vorgesehen sein kann, dass ein unteres Ende des Verstärkungselements und ein oberes Ende des Apexes jeweils als Keil mit zueinander passenden Keilflächen ausgebildet sind.

In einer besonders bevorzugten Ausgestaltung der Erfindung ist vorgesehen, dass das Verstärkungselement im Wesentlichen drei Bereiche umfasst, nämlich einen mittleren Bereich mit der nach axial innen gerichteten konvexen Wölbung, einen oberen Bereich und einen unteren Bereich, wobei ein Übergang des mittleren Bereichs zum unteren Bereich und zum oberen Bereich durch zwei Krümmungsumkehrungen der Mittellinie des Verstärkungselements gebildet ist. Hierbei kann weiter vorgesehen sein, dass der obere Bereich des Verstärkungselements konkavkonvex gewölbt ist, derart, dass eine konvex gebogene Oberfläche nach axial außen gerichtet ist.

Besonders vorteilhaft hat es sich erwiesen, wenn der Radius R des konkaven, nach axial gerichteten Bogens des oberen Bereichs des Verstärkungselements im Normalbetrieb zwischen 30 und 40 mm und im Notlaufzustand zwischen 5 und 12 mm, vorzugsweise zwischen 8 und 12 mm beträgt, wodurch Knickbeanspruchungen in diesem kritischen Bereich auf ein Mindestmaß reduziert werden können.

In einer weiteren praktischen Ausgestaltung kann vorgesehen sein, dass das Verstärkungselement aus einer Silica-Gummimischung besteht. Es hat sich bei praktischen Versuchen herausgestellt, dass eine derartige Mischung, welche sonst nur für Laufstreifenmischungen Verwendung findet, besonders gute Eigenschaften bezüglich der Haltbarkeit des Verstärkungselements besitzt.

In einer besonders bevorzugten Ausgestaltung der Erfindung kann vorgesehen sein, dass das Seitenwandteil etwa im Bereich der ersten Krümmungsumkehrung seine geringste Dicke aufweist. Diese Maßnahme fördert das leichte und spannungslose Einbiegen der Seitenwand ach axial innen.

Schließlich kann vorgesehen sein, dass die Krümmung des Verstärkungselements zwischen den Krümmungsumkehrungen im drucklosen Zustand des Fahrzeugluftreifens stärker ist als im aufgepumpten Zustand. Anders ausgedrückt ist das Verstärkungselement und entsprechend das Seitenwandteil nach Fertigstellung des Reifens relativ stark nach innen gekrümmt und spannungslos. Das Aufpumpen des Reifens auf ca. 2 - 3 bar bewirkt ein Ausbeulen der Seitenwand nach außen. Tritt der Notlauffall ein, kehrt die Seitenwand in ihre ursprüngliche, spannunglose Lage zurück. Dies ist gegenüber den herkömmlichen Lösungen vorteilhaft, da dort Spannungen durch ein Verbiegen entgegen der natürlichen Ausrichtung des Verstärkungselements auftreten und ein Verschleiß des Verstärkungselementes fördern.

Weitere Vorteile und Ausgestaltung der Erfindung werden anhand der Zeichnung und der Patentansprüche näher beschrieben. Die Zeichnung zeigt:
- Fig. 1: eine Teilansicht eines ersten Ausführungsbeispiels des erfindungsgemäßen Fahrzeugluftreifens mit Radialschnitt
- Fig. 2: den Reifen aus Figur 1 unter Belassung
- Fig. 3: eine Teilansicht eines zweiten Ausführungsbeispiels eines erfindungsgemäßen Fahrzeugluftreifens in Radialschnitt.

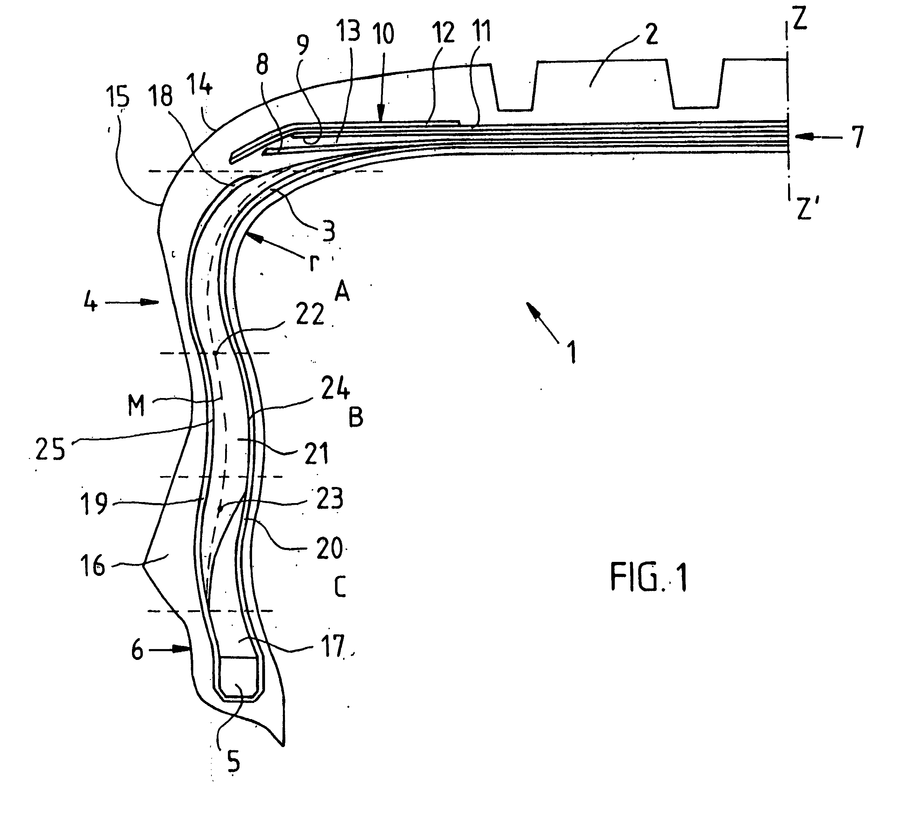

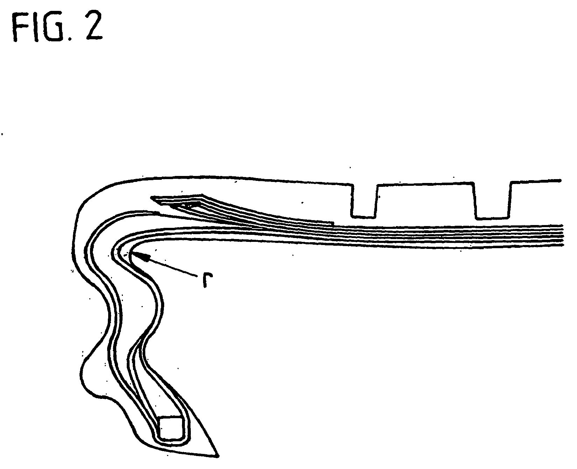

In den Figuren 1 und 2 ist ein erstes Ausführungsbeispiel eines erfindungsgemäßen Fahrzeugluftreifens 1 im Radialschnitt dargestellt, wobei die Figuren die linke Hälfte eines ansonsten symmetrischen Reifens im Schnitt durch den Reifenzenit Z-Z' zeigen. Wie herkömmliche Reifen weist der Fahrzeugluftreifen 1 einen Laufstreifen 2 und eine aus einer Vielzahl von Festigkeitsträgern gebildeten Radialkarkasse 3 auf. Die Festigkeitsträger der Radialkarkasse 3 können Corde sein, insbesondere Polyester-Corde, aber auch Corde aus anderen Materialien, wie Aramid oder Stahl können verwendet werden, ebenso wie Hybrid-Corde aus Nylon und Aramid. Die Radialkarkasse 3 erstreckt sich vom Scheitelbereich des Fahrzeugluftreifens 1 über zwei Seitenwandteile, von denen in den Figuren ein linkes Seitenwandteil 4 dargestellt ist, nach radial innen und ist an Kernen 5 von Wülsten 6 verankert. Zwischen Scheitelbereich der Radialkarkasse 3 und dem Laufstreifen 2 ist ein Gürtel 7 angeordnet, welcher im gezeigten Ausführungsbeispiel aus zwei Cordlagen 8, 9 besteht. Der Gürtel 7 ist mit einer Bandage 10 verstärkt, welche im gezeigten Ausführungsbeispiel aus einer unteren Lage 11 und aus einer oberen Lage 12 besteht, welche beide in Umfangsrichtung auf den Gürtel während des Herstellungsprozesses aufgespult sind. Zwischen den Cordlagen 8, 9 ist ein Gummikissen 13 angeordnet, welches für einen Abstand zwischen den Gürtellagen in ihrem Kantenbereich sorgt.

Der Laufstreifen 2 geht an seiner Oberfläche 14 durch einen Schulterbereich 15 in das Seitenwandteil 4 über, welches an seinem unteren Ende vor dem Übergang in den Wulst 6 eine Scheuerleiste 16 oder Felgenschutzrippe aufweist. Ist ist aber auch möglich, auf diese zu verzichten.

Die Karkasse 3 ist um den Kern 5 und einen Apex 17 so herumgeführt, dass ein Ende 18 der Radialkarkasse 3 etwa unterhalb des Gürtels 7 bzw. der Bandage 10 endet. Ein den Lagenumschlag bildender, axial äußerer Bereich 19 der Radialkarkasse 3 schließt zwischen sich und einem axial inneren Bereich 20 der Radialkarkasse ein Verstärkungselement 21 ein, welches dazu dient, das Fahren auch bei drucklosem Zustand des Fahrzeugluftreifens 1 zumindest über eine gewisse Distanz zu ermöglichen.

Bezüglich eines Krümmungsverlaufs des Verstärkungselements 21, dem der Krümmungsverlauf des Seitenwandteils 4 folgt, lässt sich das Verstärkungselement 21 in drei Bereiche einteilen, nämlich in einen oberen Bereich A, einem mittleren Bereich B und einem unteren Bereich C. Eine Mittellinie M des Verstärkungselements 21 weist eine Krümmung auf, welche zunächst der Krümmung des Schulterbereichs 15 folgt und etwa im oberen Drittel des Seitenwandteils 4 eine erste Krümmungsumkehrung 22 aufweist. Von der ersten Krümmungsumkehrung 22 bis zu einer zweiten Krümmungsumkehrung 23 verläuft der Bogen der Mittellinie M nach axial innen gerichtet. Im mittleren Bereich B des Verstärkungselementes 21, also in etwa zwischen der ersten Krümmungsumkehrung 22 und der zweiten Krümmungsumkehrung 23 besitzt das Verstärkungselement 21 ein konvexkonkaves Profil, dessen konvexe Wölbung 24 nach axial innen gerichtet ist. Entsprechend weisen Verstärkungselement 21 und Seitenwand 3 in diesem Bereich axial außen eine konkave Einbuchtung 25 auf.

Im unteren Bereich C ist das Verstärkungselement 21 als Keil ausgebildet, welcher eine Keilfläche aufweist, welche mit einer entsprechend ausgebildeten Keilfläche des Apex 17 korrespondiert. Anders als in Figur 1 dargestellt, ist es auch möglich, Verstärkungselement 21 und Apex 17 einstückig auszubilden.

Mit r ist der Radius des Bogens des Verstärkungselements 21 im oberen Bereich A bzw. der Radius des inneren Bereichs des Fahrzeugluftreifens 1 im Übergangsbereich Schulter/Laufstreifen angedeutet. Im normalen Zustand, als im aufgepumpten Zustand, beträgt der Radius etwa 30 - 40 mm.

In Figur 2 ist der Fahrzeugluftreifen 1 aus Figur 1 im luftleeren Zustand unter Last dargestellt, also in einem Zustand, der dem Pannenlauffall entspricht. Zu erkennen ist insbesondere, dass sich Seitenwandteil 4 und Verstärkungselement 21 nach axial innen gebeult haben. Der Radius r beträgt hier etwa zwischen 8 und 12 mm, kann aber im Extremfall auch nur 5 mm betragen.

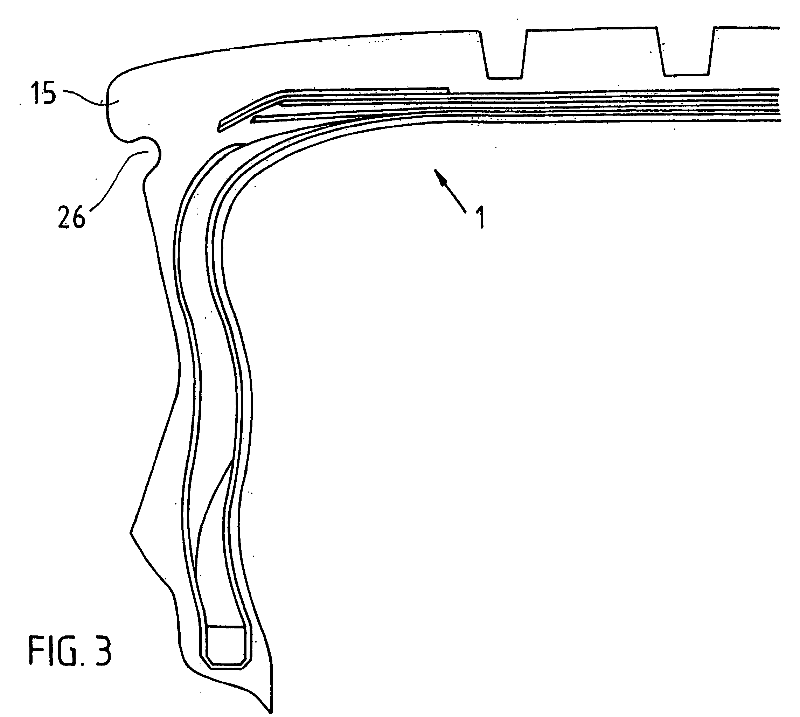

In Figur 3 ist ein zweites Ausführungsbeispiel eines erfindungsgemäßen Fahrzeugluftreifens 1 dargestellt, der sich von dem in den Figuren 1 und 2 dargestellten Fahrzeugluftreifen 1 dadurch unterscheidet, dass seine Schulter zur Vergrößerung der Aufstandsfläche, insbesondere im Pannenlauffall, weiter über den Gürtelkantenbereich hinausgezogen ist. Unterhalb der Schulter 15 ist eine Rinne 26 angeordnet, welche der Wärmeabfuhr von beim Pannenlauffall entstehender Wärme dient.

## Patentansprüche

1. Fahrzeugluftreifen (1) mit einem Laufstreifen (2), einer aus einer Vielzahl von Festigkeitsträgem gebildeten Radialkarkasse (3), die sich vom Scheitelbereich über zwei Seitenwandteile (4) nach radial innen erstreckt und an Kernen (5) von Wülsten (6) verankert ist, und einem Gürtel (7) aus wenigstens zwei Cordlagen (8, 9), welcher zwischen dem Laufstreifen (2) und dem Scheitelbereich der Radialkarkasse (3) eingebettet ist, wobei in den Seitenwandteilen (4) jeweils wenigstens ein Verstärkungselement (21) zur Ermöglichung einer Pannenfahrt eingebettet ist, welches steifer als das sie umgebende Seitenwandteil (4) ist, wobei die Seitenwandteile (4) und das Verstärkungselement einen wellenförmigen Krümmungsverlauf aufweisen, derart, dass eine Mittellinie (M) des Verstärkungselementes (21) wenigstens eine Krümmungsumkehrung (22) aufweist, **dadurch gekennzeichnet dass** das Verstärkungselement (21) in einem mittleren Bereich (B) ein konvexkonkaves Profil aufweist, dessen konvexe Wölbung (24) nach axial innen gerichtet ist.

2. Fahrzeugluftreifen nach Anspruch 1, **dadurch gekennzeichnet, dass** die Radialkarkasse (3) um die Kerne (5) von axial innen nach axial außen herumgeführt ist, wobei ein Ende (18) der Radialkarkasse (3) von einer unteren Cordlage (8) des Gürtels (7) abgedeckt ist.

3. Fahrzeugluftreifen nach Anspruch 2, **dadurch gekennzeichnet, dass** die Radialkarkasse (3) aus zwei Lagen besteht, welche um die Kerne (5) von axial innen nach axial außen herumgeführt sind.

4. Fahrzeugluftreifen nach Anspruch 3, **dadurch gekennzeichnet, dass** wenigstens ein Ende (18) einer Lage der Radialkarkasse (3) in einem mittleren (B) oder einem oberen Bereich (A) des Seitenwandteils (4) angeordnet ist.

5. Fahrzeugluftreifen nach einem der Ansprüche 1 - 4, **dadurch gekennzeichnet, dass** ein Ende des Verstärkungselements (21) von wenigstens einer Cordlage (8; 9) des Gürtels (7) abgedeckt ist.

6. Fahrzeugluftreifen nach einem der Ansprüche 1 - 5, **dadurch gekennzeichnet, dass** das Verstärkungselement (21) einstückig mit einem über dem Kern (5) angeordneten Apex (17) verbunden ist.

7. Fahrzeugluftreifen nach einem der Ansprüche 1 - 5, **dadurch gekennzeichnet, dass** das Verstärkungselement (21) und der Apex (17) zwei separate Bauteile sind.

8. Fahrzeugluftreifen nach einem der Ansprüche 1 - 7, **dadurch gekennzeichnet, dass** Verstärkungselement (21) und Apex (17) aus dem gleichen Material bestehen.

9. Fahrzeugluftreifen nach Anspruch 7, **dadurch gekennzeichnet, dass** ein unteres Ende des Verstärkungselements (21) und ein oberes Ende des Apex (17) jeweils als Keil mit zueinander passenden Keilflächen ausgebildet sind.

10. Fahrzeugluftreifen nach einem der Ansprüche 1 - 9, **dadurch gekennzeichnet, dass** das Verstärkungselement (21) im wesentlichen drei Bereiche (A, B, C) umfaßt, nämlich einen mittleren Bereich (B) mit der nach axial innen gerichteten konvexen Wölbung (24), einen oberen Bereich (A) und einem unteren Bereich (C), wobei ein Übergang des mittleren Bereichs (B) zum unteren Bereich (C) und zum oberen Bereich (A) durch zwei Krümmungsumkehrungen (22, 23) der Mittellinie (M) des Verstärkungselements (21) gebildet ist.

11. Fahrzeugluftreifen nach Anspruch 10, **dadurch gekennzeichnet, dass** der obere Bereich (A) des Verstärkungselements (21) konkavkonvex gewölbt ist, derart, dass eine konvex gebogene Oberfläche nach axial außen gerichtet ist.

12. Fahrzeugluftreifen nach Anspruch 11, **dadurch gekennzeichnet, dass** der Radius (r) des konkaven, nach axial innen gerichteten Bogens des oberen Bereich (A) des Verstärkungselements (21) im Normalbetrieb zwischen 30 und 40 mm und im Notlaufzustand zwischen 5 und 12 mm, vorzugsweise zwischen 8 und 12 mm beträgt.

13. Fahrzeugluftreifen nach einem der Ansprüche 1 - 12, **dadurch gekennzeichnet, dass** das Verstärkungselement (21) aus einer Silica-Gummimischung besteht.

14. Fahrzeugluftreifen nach einem der Ansprüche 1 - 13, **dadurch gekennzeichnet, dass** das Seitenwandteil (4) etwa im Bereich der ersten Krümmungsumkehrung (22) seine geringste Dicke aufweist.

15. Fahrzeugluftreifen nach einem der Ansprüche 1 - 14, **dadurch gekennzeichnet, dass** die Krümmung des Verstärkungselements (21) zwischen den, Krümmungsumkehrungen (22, 23) im drucklosen Zustand des Fahrzeugluftreifens stärker ist als im aufgepumpten Zustand.

## Claims

1. Pneumatic vehicle tyre (1) with a tread rubber (2), a radial ply casing (3), which is formed by a multiplicity of reinforcements, extends from the apex region over two sidewall parts (4) radially inwards and is anchored on cores (5) of beads (6), and a belt (7) comprising at least two layers of cord fabric (8, 9), which is embedded between the tread rubber (2) and the apex region of the radial ply casing (3), at least one reinforcing element (21) which is more rigid than the surrounding sidewall part (4) being respectively embedded in the sidewall parts (4) to permit running when flat, the sidewall parts (4) and the reinforcing element having a wave-shaped curvature profile in such a way that a centre line (M) of the reinforcing element (21) has at least one reversal of curvature (22), **characterized in that** the reinforcing element (21) has in a central region (B) a convex-concave profile, the convexity (24) of which is directed axially inwards.

2. Pneumatic vehicle tyre according to Claim 1, **characterized in that** the radial ply casing (3) is taken around the cores (5) from the axial inside to the axial outside, one end (18) of the radial ply casing (3) being covered by a lower layer of cord fabric (8) of the belt (7).

3. Pneumatic vehicle tyre according to Claim 2, **characterized in that** the radial ply casing (3) comprises two plies, which are taken around the cores (5) from the axial inside to the axial outside.

4. Pneumatic vehicle tyre according to Claim 3, **characterized in that** at least one end (18) of a ply of the radial ply casing (3) is arranged in a central region (B) or an upper region (A) of the sidewall part (4).

5. Pneumatic vehicle tyre according to one of Claims 1 - 4, **characterized in that** one end of the reinforcing element (21) is covered by at least one layer of cord fabric (8; 9) of the belt (7).

6. Pneumatic vehicle tyre according to one of Claims 1 - 5, **characterized in that** the reinforcing element (21) is connected in one piece to an apex (17) arranged over the core (5).

7. Pneumatic vehicle tyre according to one of Claims 1 - 5, **characterized in that** the reinforcing element (21) and the apex (17) are two separate components.

8. Pneumatic vehicle tyre according to one of Claims 1 - 7, **characterized in that** the reinforcing element (21) and the apex (17) consist of the same material.

9. Pneumatic vehicle tyre according to Claim 7, **characterized in that** a lower end of the reinforcing element (21) and an upper end of the apex (17) are respectively formed as a wedge with matching wedge surfaces.

10. Pneumatic vehicle tyre according to one of Claims 1 - 9, **characterized in that** the reinforcing element (21) substantially comprises three regions (A, B, C), that is a central region (B) with the axially inwardly directed convexity (24), an upper region (A) and a lower region (C), the transition of the central region (B) to the lower region (C) and to the upper region (A) being formed by two reversals of curvature (22, 23) of the centre line (M) of the reinforcing element (21).

11. Pneumatic vehicle tyre according to Claim 10, **characterized in that** the upper region (A) of the reinforcing element (21) is concave-convexly curved in such a way that a convexly curved surface is directed axially outwards.

12. Pneumatic vehicle tyre according to Claim 11, **characterized in that** the radius (r) of the concave, axially inwardly directed arc of the upper region (A) of the reinforcing element (21) in normal operation is between 30 and 40 mm and in the emergency running state is between 5 and 12 mm, preferably between 8 and 12 mm.

13. Pneumatic vehicle tyre according to one of Claims 1 - 12, **characterized in that** the reinforcing element (21) consists of a silica-rubber mix.

14. Pneumatic vehicle tyre according to one of Claims 1 - 13, **characterized in that** the sidewall part (4) has its smallest thickness approximately in the region of the first reversal of curvature (22).

15. Pneumatic vehicle tyre according to one of Claims 1 - 14, **characterized in that** the curvature of the reinforcing element (21) between the reversals of curvature (22, 23) is greater in the pressureless state of the pneumatic vehicle tyre than in the inflated state.

## Revendications

1. Pneumatique de véhicule (1) comprenant une bande de roulement (2), une carcasse radiale (3) formée par une pluralité de supports de rigidité, qui s'étend depuis la région du sommet sur deux parties de parois latérales (4) radialement vers l'intérieur et qui est ancrée au niveau de tringles (5) de talons (6), et une armature (7) constituée de deux nappes de corde (8, 9), qui est noyée entre la bande de roulement (2) et la région du sommet de la carcasse radiale (3), au moins un élément de renforcement (21) étant à chaque fois noyé dans les parties de parois latérales (4) pour permettre de rouler à plat, cet élément étant plus rigide que la partie de paroi latérale (4) l'entourant, les parties de parois latérales (4) et l'élément de renforcement présentant une allure courbée en forme d'ondulation de telle sorte qu'un axe médian (M) de l'élément de renforcement (21) présente au moins une inversion de courbure (22), **caractérisé en ce que** l'élément de renforcement (21) présente dans une région centrale (B) un profil convexe-concave dont la courbure convexe (24) est orientée radialement vers l'intérieur.

2. Pneumatique de véhicule selon la revendication 1, **caractérisé en ce que** la carcasse radiale (3) est guidée autour des tringles (5) axialement depuis l'intérieur vers l'extérieur, une extrémité (18) de la carcasse radiale (3) étant recouverte par une nappe de corde inférieure (8) de l'armature (7).

3. Pneumatique de véhicule selon la revendication 2, **caractérisé en ce que** la carcasse radiale (3) se compose de deux nappes qui sont guidées autour des tringles (5) axialement depuis l'intérieur vers l'extérieur.

4. Pneumatique de véhicule selon la revendication 3, **caractérisé en ce qu'**au moins une extrémité (18) d'une nappe de la carcasse radiale (3) est disposée dans une région centrale (B) ou supérieure (A) de la partie de paroi latérale (4).

5. Pneumatique selon l'une quelconque des revendications 1 à 4, **caractérisé en ce qu'**une extrémité de l'élément de renforcement (21) est recouverte par au moins une nappe de corde (8 ; 9) de l'armature (7).

6. Pneumatique selon l'une quelconque des revendications 1 à 5, **caractérisé en ce que** l'élément de renforcement (21) est connecté d'une seule pièce à un sommet (17) disposé sur la tringle (5).

7. Pneumatique selon l'une quelconque des revendications 1 à 5, **caractérisé en ce que** l'élément de renforcement (21) et le sommet (17) sont deux composants séparés.

8. Pneumatique selon l'une quelconque des revendications 1 à 7, **caractérisé en ce que** l'élément de renforcement (21) et le sommet (17) se composent du même matériau.

9. Pneumatique selon la revendication 7, **caractérisé en ce qu'**une extrémité inférieure de l'élément de renforcement (21) et une extrémité supérieure du sommet (17) sont réalisées à chaque fois sous forme de coin avec des faces de coin adaptées l'une à l'autre.

10. Pneumatique selon l'une quelconque des revendications 1 à 9, **caractérisé en ce que** l'élément de renforcement (21) comprend essentiellement trois régions (A, B, C), à savoir une région centrale (B) avec la courbure (24) convexe orientées axialement vers l'intérieur, une région supérieure (A) et une région inférieure (C), un passage de la région centrale (B) à la région inférieure (C) et à la région supérieure (A) est formé par deux inversions de courbure (22, 23) de l'axe médian (M) de l'élément de renforcement (21).

11. Pneumatique selon la revendication 10, **caractérisé en ce que** la région supérieure (A) de l'élément de renforcement (21) a une courbure concave-convexe, de telle sorte qu'une surface de courbure convexe soit orientée axialement vers l'extérieur.

12. Pneumatique selon la revendication 11, **caractérisé en ce que** le rayon (r) de l'arc concave orienté axialement vers l'intérieur de la région supérieure (A) de l'élément de renforcement (21) vaut en fonctionnement normal entre 30 et 40 mm et en état de fonctionnement de secours entre 5 et 12 mm, de préférence entre 8 et 12 mm.

13. Pneumatique selon l'une quelconque des revendications 1 à 12, **caractérisé en ce que** l'élément de renforcement (21) se compose d'un mélange de silice et de caoutchouc.

14. Pneumatique selon l'une quelconque des revendications 1 à 13, **caractérisé en ce que** la partie de paroi latérale (4) présente approximativement dans la région de la première inversion de courbure (22) son épaisseur la plus petite.

15. Pneumatique selon l'une quelconque des revendications 1 à 14, **caractérisé en ce que** la courbure de l'élément de renforcement (21) entre les inversions de courbure (22, 23) est plus importante dans l'état sans pression du pneumatique que dans l'état pompé.
